## Europäisches Patentamt
## European Patent Office
## Office européen des brevets

(11) Veröffentlichungsnummer: **0 075 766**
**B1**

(12) # EUROPÄISCHE PATENTSCHRIFT

(45) Veröffentlichungstag der Patentschrift:
08.03.89

(51) Int. Cl.⁴: **G 01 J 1/04,** G 01 N 21/55

(21) Anmeldenummer: **82108380.5**

(22) Anmeldetag: **11.09.82**

(54) Vorrichtung zur reflexionsphotometrischen Messung.

(30) Priorität: **30.09.81  DE 3138878**

(43) Veröffentlichungstag der Anmeldung:
**06.04.83 Patentblatt 83/14**

(45) Bekanntmachung des Hinweises auf die Patenterteilung:
**08.03.89 Patentblatt 89/10**

(84) Benannte Vertragsstaaten:
**AT BE CH DE FR GB IT LI LU NL SE**

(56) Entgegenhaltungen:
**DD-A-110 341**
**DE-A-2 902 776**
**FR-A-2 466 783**
**US-A-2 280 993**
**US-A-4 232 971**

(73) Patentinhaber: **BOEHRINGER MANNHEIM GMBH,**
**Sandhofer Strasse 116, D-6800 Mannheim 31 (DE)**

(72) Erfinder: **von Rosenbladt, Rudolf, Ferdinandstrasse**
**7, D-6380 Bad Homburg 1 (DE)**
Erfinder: **Nenninger, Klaus, Lilienstrasse 36, D-6800**
**Mannheim 71 (DE)**
Erfinder: **Schüssler, Rudolf, Oberlacher Strasse 20,**
**D-6840 Lampertheim (DE)**

LIBER, STOCKHOLM 1989

**Beschreibung**

Die Erfindung betrifft eine Vorrichtung zur reflexionsphotometrischen Messung des Reflexionsvermögens einer Meßfläche, die einen bestimmten, zur Auswertung heranzuziehenden Teil einer Objektfläche, insbesondere eines Testfeldes zur Bestimmung medizinisch relevanter Bestandteile von Körperflüssigkeiten bildet, mit einer Lichtquelle zur Beleuchtung der Meßfläche bevorzugt mit diffusem Licht und einem Photoempfänger zum Empfang des von der Bezugsfläche reflektierten Lichts.

In der klinischen Chemie hat die Bestimmung medizinisch relevanter Bestandteile von Körperflüssigkeiten (Blut, Urin) mit Hilfe von Teststreifen zunehmend an Bedeutung gewonnen. Die untersuchten Inhaltsstoffe der Körperflüssigkeiten führen dabei zu charakteristischen Farbreaktionen auf den Testfeldern, welche visuell ausgewertet werden können, um eine qualitative Aussage zu erhalten. In neuerer Zeit hat darüberhinaus die quantitative Bestimmung medizinisch relevanter Parameter mit Hilfe von Teststreifen und entsprechenden Auswertegeräten zunehmend an Bedeutung gewonnen. Dabei werden sowohl an die Teststreifen als auch an die Auswertegeräte sehr hohe Anforderungen gestellt, um eine befriedigende Meßgenauigkeit zu erreichen. Die vorliegende Erfindung richtet sich auf Maßnahmen zur Erhöhung der Genauigkeit der Geräte.

Bei der Reflexionsphotometrie von Teststreifen mißt man die Gesamtreflexion, die sich aus dem diffusen Anteil und dem regulären Anteil (Spiegelreflexion) zusammensetzt. Um beide Anteile gemeinsam zu erfassen, wird das Testfeld entweder gezielt beleuchtet und die diffuse Reflexion gemessen oder es wird eine diffuse Beleuchtung vorgesehen, wobei dann das reflektierte Licht gezielt gemessen wird. Die vorliegende Erfindung richtet sich speziell auf den zweiten Fall, wobei bevorzugt für die diffuse Beleuchtung des Testfeldes des Teststreifens eine Ulbricht'sche Kugel verwendet wird.

Bei solchermaßen aufgebauten Reflexionsphotometern ist es äußerst wichtig, daß die von dem Photoempfänger empfangenen Strahlen tatsächlich praktisch ausschließlich von demjenigen Teil einer Objektfläche, auf den sich die Messung beziehen soll und der hier als Meß- oder Bezugsfläche bezeichnet wird, ausgehen und nicht von anderen reflektierenden Objekten, die in dem Gerät von dem zur Messung verwendeten Licht getroffen werden, bzw. von anderen Störlichtquellen. Diese scheinbar einfach zu erfüllende Forderung verursacht erhebliche Probleme, wenn es, wie bei der reflexionsphotometrischen Auswertung von Teststreifen, auf höchste Genauigkeit ankommt und darüberhinaus die bei derartigen Geräten zu beachtenden Randbedingungen berücksichtigt werden. Die Geräte sollen nämlich möglichst klein und handlich sein und in vielen Fällen mit einer Batterie als Energiequelle auskommen. Deswegen steht in der Regel nur eine geringe Lichtintensität zur Verfügung und es ist wesentlich, daß das von der Meßfläche reflektierte Licht möglichst ungehindert zum Photoempfänger gelangt, während jegliche Störstrahlung möglichst vollständig ausgeblendet wird. Da die Geräte in großen Stückzahlen auch für die Auswertung durch Laien (insbesondere Diabetiker bei der Selbstkontrolle des Zuckerspiegels) hergestellt werden sollen, kommt es weiterhin darauf an, daß die photometrische Meßeinrichtung kostengünstig zu produzieren und möglichst einfach zu montieren ist, ohne daß die zu erreichende Meßgenauigkeit dadurch leidet. Insbesondere sollen sehr enge Toleranzen und aufwendige Justierschritte bei der Montage vermieden werden.

Der Erfindung liegt daher die Aufgabe zugrunde, mit möglichst einfachen Mitteln eine Verbesserung der Meßgenauigkeit zu erreichen und insbesondere den Einfluß störender Randstrahlen, die nicht von der Meßfläche stammen, zu unterdrücken, wobei die Strahlen von der Meßfläche möglichst ungehindert zu dem Photoempfänger gelangen sollen. Dabei soll eine hohe Funktionssicherheit unter allen Betriebsbedingungen gewährleistet sein.

Diese Aufgabe wird erfindungsgemäß bei einer Vorrichtung der eingangs bezeichneten Art durch die Merkmale gemäß den Patentansprüchen gelöst.

Dadurch, daß sich die Blendenfläche der Blende über eine gewisse Strecke des Strahlenganges erstreckt, wobei ihre Querschnittsfläche von der Meßfläche zum Photoempfänger hin im wesentlichen stetig abnimmt, wird ein praktisch vollständiges Ausblenden störender Randstrahlen erreicht, ohne daß die Intensität des von der Bezugsfläche auf den Photoempfänger auftreffenden Lichts wesentlich vermindert wird. Lediglich die vom Rand der Meßfläche angegeben den Strahlen werden entsprechend einer weiter unten erläuterten Bewertungskurve in vorteilhafter Weise geschwächt.

Die ausgezeichnete Wirkung der erfindungsgemäßen Blendenkonstruktion beweist sich daran, daß beim Ausmessen einer total absorbierenden Bezugsfläche ohne weitere Korrekturmaßnahmen praktisch exakt das Remissionsvermögen Null gemessen wird. Praktische Versuche haben ergeben, daß die durch Streulicht verursachte Restreflexion bei einem solchen Experiment mit der erfindungsgemäßen Blende unter 0,05 % liegt, während mit bekannten Blendenkonstruktionen lediglich 0,5 % Restreflexion erreicht werden. Damit werden die in den Fachkreisen bekannten Null-Punkt-Probleme mit einem überraschend geringen konstruktiven Aufwand gelöst.

Die erfindungsgemäße Blendenkonstruktion kann in verschiedenerlei Weise variiert werden. Der Querschnitt des Kegelmantels in einer Ebene senkrecht zur Symmetrieachse des Strahlenganges ist bevorzugt kreisförmig, kann jedoch, wenn eine nicht-kreisförmige Bezugsfläche ausgemessen werden soll, auch eine andere Form, beispielsweise die einer Elypse oder eines Ovals haben. Die innere, dem Strahlengang zugewandte Oberlache der Blendenfläche ist absorbierend, bevorzugt schwarz ausgebildet. Bevorzugt weist sie eine definierte Rauhigkeit von etwa 10 μm auf. Praktisch besonders vorteilhaft ist es, wenn das gesamte, die Blende beinhaltende Bauteil aus einem entsprechend strukturierten schwarzen Kunststoff besteht. Dabei ist es auch möglich, daß die Blendenfläche abgestuft ist, so daß ihre Begrenzungslinien in einem Längsschnitt parallel zur Symmetrieachse des Strahlenganges einen unstetigen stufenförmigen Verlauf haben. Voraussetzung für die Erreichung der erfindungsgemäßen Vorteile ist lediglich, daß die durch die Blendenfläche umfaßte Blendenöffnung sich in ihrer Gesamtheit vom Photoempfänger zur Bezugsfläche hin erweitert und dabei so gestaltet ist, daß in der weiter unten näher erläuterten Art und Weise in die Blendenöffnung einfallende und damit auf die Blendenfläche auftreffende Randstrahlen in einem solchen Winkel reflektiert werden, daß eventuell nicht absorbierte Anteile wiederholt auf die Blendenfläche auftreffen und sich dadurch totlaufen.

Besonders bevorzugt ist die Blendenfläche derartig gestaltet, daß ihr oberer Rand, ihr unterer Rand und die Begrenzung der Meßfläche, deren Reflexionsvermögen zu bestimmen ist, näherungsweise auf einer Schar von Geraden liegen, die die Symmetrieachse an einem Punkt innerhalb der durch die Blendenfläche umfassten Blendenöffnung, also zwischen den durch den oberen und unteren Rand der Blendenfläche definierten Ebenen schneiden und die Symmetrieachse symmetrisch umgeben. Auf diese Weise wird eine besonders günstige Bewertung der Meßfläche erreicht, weil die in der Regel weniger homogenen Randzonen des Testfeldes ausgeblendet werden und überwiegend die Strahlen aus der Mitte der Bezugsfläche zur Auswertung beitragen.

Bevorzugt ist eine zweite Blende vorgesehen, welche die Meßfläche maskenartig umgibt. Sie hat eine im wesentlichen ebene oder zum Photoempfänger konkav gekrümmte absorbierende Blendenfläche. Durch diese zusätzliche Maßnahme werden die besonders kritischen Randstrahlen, die auf die kegelstumpfmantelförmige Blendenfläche unter flachen Winkel auftreffen; zusätzlich geschwächt. Die Öffnung der zweiten Blende umgibt aus praktischen Gründen nicht exakt den Rand der gewünschten Bezugsfläche, sondern der Radius der Begrenzung der Öffnung der zweiten Blende ist größenordnungsmäßig 10 % größer als der jeweilige Radius des Randes der Bezugsfläche. Dadurch wird vermieden, daß bei den nicht ganz vermeidbaren Toleranzen der Bauteile ein Teil der Blendenfläche der zweiten Blende in die Bezugsfläche fällt und dadurch das Meßergebnis verfälscht wird.

Für den erwähnten, besonders bevorzugten Anwendungsfall, bei dem die Bezugsfläche über eine Ulbricht'sche Kugel diffus heleuchtet wird, ist gemäß dem selbständigen Anspruch 5 ein zweiter Photoempfänger zur Messung eines bekannten Referenzwertes an einer Referenzfläche mit bekanntem Reflexionsvermögen vorgesehen. Dabei dient bevorzugt ein Teil der inneren Oberfläche der Ulbricht'schen Kugel als Referenzfläche. In diesem Fall weisen gemäß bevorzugter Ausführungsform der Erfindung beide Photoempfänger vollkommen gleich ausgebildete und angeordnete Blendeneinrichtungen auf. Es wird somit bezüglich der Lichtquelle und/oder innerhalb der genannten Kugel eine symmetrische Anordnung von Photoempfängern, zugehörigen Blenden und Meßflächen gewährleistet, wodurch eine hohe Meßgenauigkeit erreicht wird. So wirken sich äußere Einflüsse, wie zum Beispiel Temperaturschwankungen, Alterungserscheinungen bezüglich der beiden Photoempfänger in gleicher Weise aus und insbesondere durch die gleiche Anordnung und Ausbildung der Blenden werden für die beiden Photoempfänger übereinstimmende Empfangsbedingungen geschaffen. Es ist ersichtlich, daß hierdurch das Langzeitverhalten der Meßeinrichtung sehr günstig wird.

Dadurch, daß ein Teil der inneren Kugeloberfläche der Ulbricht'schen Kugel als Referenzfläche verwendet wird, ist kein besonderer, separater Standard als Bezugsfläche erforderlich, sondern ein Teil der inneren Kugeloberfläche selbst ist Referenzfläche. Die erfindungsgemäße Meßeinrichtung weist dabei ein besonders gutes Langzeitverhalten auf, da sich die übrige Kugeloberfläche im Laufe der Zeit, falls Änderungen auftreten, in der gleichen Weise wie der als Referenzfläche verwendete Teil ändert. Demzufolge ändert sich die Intensität, mit der die Meßfläche beleuchtet wird im gleichen Maße wie das Reflexionsvermögen der Referenzfläche und bei der zur Auswertung herangezogenen Quotientenbildung eliminieren sich beide Effekte.

In einer bevorzugten Ausführungsform sind Blende und Photoempfänger jeweils in einer Aufnahmevorrichtung angeordnet, welche mittels sternförmig angeordneten Armen in der bevorzugt aus zwei Hälften bestehenden Kugel angeordnet sind. Auf diese vorteilhafte Weise wird zum einen die oben erläuterte symmetrische Anordnung der Blenden und Photoempfänger erreicht und zum anderen wird eine einfache und kostengünstige Hers tellung der Meßeinrichtung gewährleistet. Weiterhin wird ohne besonderen Aufwand sichergestellt, daß die Bezugsflächen von dem diffusen Licht bestrahlt werden.

Vorteilhaft ist die Lichtquelle zwischen zwei Armen von zwei Aufnahmevorrichtungen derart angeordnet, daß mittels der Arme eine direkte Bestrahlung der Bezugsflächen verhindert wird. Mit anderen Worten, die besagten Arme dienen gleichzeitig auch zur Abschirmung des von der Lichtquelle direkt ausgestrahlten Lichtes, wobei zusätzliche Bauteile, insbesondere Blenden und ähnliches, vermieden werden.

In einer bevorzugten Ausführungsform sind die Arme der Aufnahmevorrichtungen jeweils in Nuten der Kugelhälften gelagert. Es wird in einfacher Weise eine definierte und den Betriebsbedingungen gerecht werdende Lagerung und Befestigung der Photoempfänger mit den Blenden erreicht. Auch die Herstellung und Montage bereiten keine Schwierigkeiten, da die Aufnahmevorrichtungen bzw. deren Arme einfach in die genannten Nuten eingesetzt werden können.

In einer bevorzugten Ausführungsform weist die Meßeinrichtung zwei in wesentlichen gleich ausgebildete Kugelhälften auf, zwischen welchen bevorzugt zwei Zwischenringe angeordnet sind, mittels welchen die bevorzugt als eine LED ausgebildete Lichtquelle gelagert ist. Hierfür sind die Stromzuführungen bzw. Beinchen der Lichtquelle einfach zwischen die Zwischenringe eingeklemmt, wobei zur Arretierung der eine Zwischenring eine Sicke aufweist, in welche eine entsprechende Nase des anderen Zwischenringes eingreift. Die Montage und der Zusammenbau einer derart ausgebildeten Kugel ist mit wenigen Handgriffen durchführbar und die Lichtquelle ist in einer definierten Lage in der Symmetrieebene zwischen den Kugelhälften angeordnet.

Weitere Vorteile und erfindungswesentliche Merkmale ergeben sich aus dem nachfolgend anhand der Zeichnung näher erläuterten Ausführungsbeispiel. Es zeigen:

Fig. 1 eine Prinzipdarstellung einer Meßeinrichtung mit Photoempfänger und zugeordneter kegelförmiger Blende,

Fig. 2 einen Schnitt durch eine Ulbricht'sche Kugel mit zwei Photoempfängern und zugehörigen Blenden,

Fig. 3 einen Schnitt entlang der Schnittlinie III - III gemäß Fig. -2.

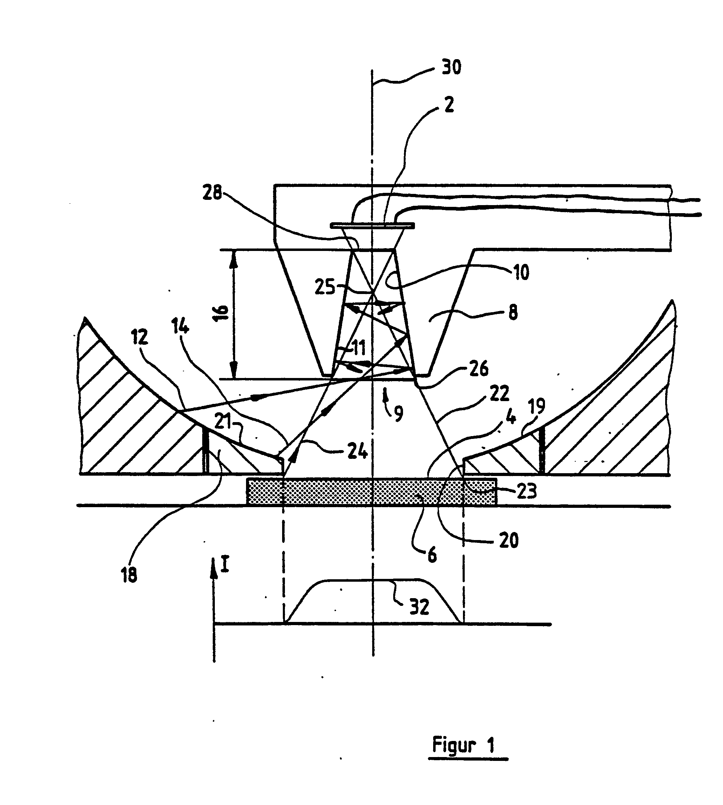

Aus der Prinzipdarstellung gemäß Fig. 1 ist ein Photoempfänger 7 ersichtlich, mittels welchem von einer Meßfläche 4 reflektiertes Licht erfaßt werden soll. Diese Meßfläche 4 ist ein bestimmter Teil der Oberfläche eines Testfeldes 6, in welchem bekannterweise chemische Reaktionen zwischen Inhaltsstoffen, einer Körperflüssigkeit (z. B. Urin, Blut) und auf dem Testfeld vorhandenen Reagentien erfolgen. Die infolge der chemischen Reaktionen eintretenden Farbveränderungen sollen mit dem Photoempfänger quantitativ erfaßt werden, wobei hier nicht weiter zu erläuternde elektronische Auswerteeinrichtungen vorgesehen sind.

Zwischen dem Photoempfänger 2 und der Meßfläche 4 befindet sich eine Blende 8. Charakteristisch an der Konstruktion der Blende 8 ist, daß sie nicht an einer bestimmten Stelle den Strahlengang begrenzt, sondern daß sich die von der Blendenfläche 10 umfasste Blendenöffnung 9 über eine Länge, die in der Fig. 1 mit dem Bezugszeichen 16 bezeichnet ist, entlang dem Strahlengang erstreckt. In der Querschnittsdarstellung der Fig. 1 bilden die Schnittlinien der Blendenfläche zwei Geraden auf beiden Seiten der Symmetrieachse 30, die zugleich Symmetrieachse des Strahlengangs und der Blendenanordnung ist. Räumlich betrachtet bildet die Blendenfläche 10 die Mantelfläche eines Kegelstumpfes mit vorzugsweise, aber nicht notwendigerweise kreisförmigen Querschnitt. Der Kegelstumpf umgibt die Symmetrieachse über die Länge 16 symmetrisch. Die Blendenfläche hat auf der der Meßfläche 4 zugewandten Seite einen unteren Rand 26 und auf der dem Photoempfänger 2 zugewandten Seite einen oberen Rand 28.

Die innere Oberfläche 11 der Blendenfläche 10 ist absorbierend, bevorzugt matt-schwarz ausgebildet. Aus Fig. 1 ist ohne weiteres ersichtlich, daß in die Blendenöffnung 9 eindringende Randstrahlen aufgrund der erfindungsgemäßen Blendenkonstruktion nicht zum Photoempfänger 2 gelangen können. Eingezeichnet sind die Randstrahlen 12 und 14. Obwohl die innere Oberfläche 11 de Blendenfläche 10 absorbierend ausgebildet ist, läßt sich in der Praxis nicht verhindern, daß ein Teil der jeweiligen Randstrahlen von der Oberfläche reflektiert wird. Für die Funktion der erfindungsgemäßen Blendenkonstruktion ist nun wesentlich, daß die Blendenfläche 10 so gestaltet ist, daß diese reflektierten Anteile von Randstrahlen derartig zurückgeworfen werden, daß sie wiederholt auf die der Symmetrieachse 30 zugewandte Oberfläche 11 der Blendenfläche 10 auftreffen. Dadurch laufen sich derartige Randstrahlen tot und werden praktisch vollständig eliminiert.

Bei der in Fig. 1 dargestellten Ausführungsform befindet sich unmittelbar oberhalb der Meßfläche 4 eine zweite Blende 18, deren Blendenfläche 19 zum Photoempfänger hin konkav gekrümmt ist. Sie hat ebenfalls eine matt-schwarz ausgebildete Oberfläche 21. Die Blende 18 weist eine von dem Rand 20 umgebene Blendenöffnung auf, wobei zwischen dem Rand 20 und der Begrenzung 23 der Meßfläche 4 ein Abstand ist, der etwa 10 % des Radius der Meßfläche 4 beträgt.

In der dargestellten Ausführungsform liegen der obere Rand 28 und der untere Rand 26 der Blendenfläche 10 sowie die Begrenzung 23 der Meßfläche 4 auf einer Schar von Geraden, wobei die in der Zeichenebene liegenden Geraden mit den Bezugszeichen 22 und 24 bezeichnet sind. Die Geraden schneiden sich alle in einem Punkt 25 der Symmetrieachse 30 innerhalb der von der Blendenfläche 10 umfassten Blendenöffnung 9. Die Länge 16 der Blende 8 ist bevorzugt mindestens so groß wie der größte Durchmesser des unteren Randes 26.

Aufgrund der Anordnung und Zuordnung der Blenden 8 und 18 wird eine besonders günstige Bewertung der von der Meßfläche 4 reflektierten Strahlung erreicht. Die Bewertungskurve der Bezugsfläche ist im unteren Teil der Fig. 1 als Kurve 32 dargestellt, wobei ersichtlich ist, daß die Intensität I der zum Photoempfänger 2 gelangenden Strahlung am Rand der Bezugsfläche zur Mitte hin allmählich anwächst. Dies ist insofern günstig, als die Testfelder von Teststreifen häufig weniger homogene Randbereiche aufweisen, die bei der Auswertung eine geringere Bewertung erfahren sollen. Im mittleren Bereich verläuft die Bewertungskurve horizontal, d. h. die von der Meßfläche 4 ausgehende Strahlung wird praktisch ungehindert an den Photoempfänger 2 durchgelassen, so daß die volle Intensität der Strahlung genutzt wird.

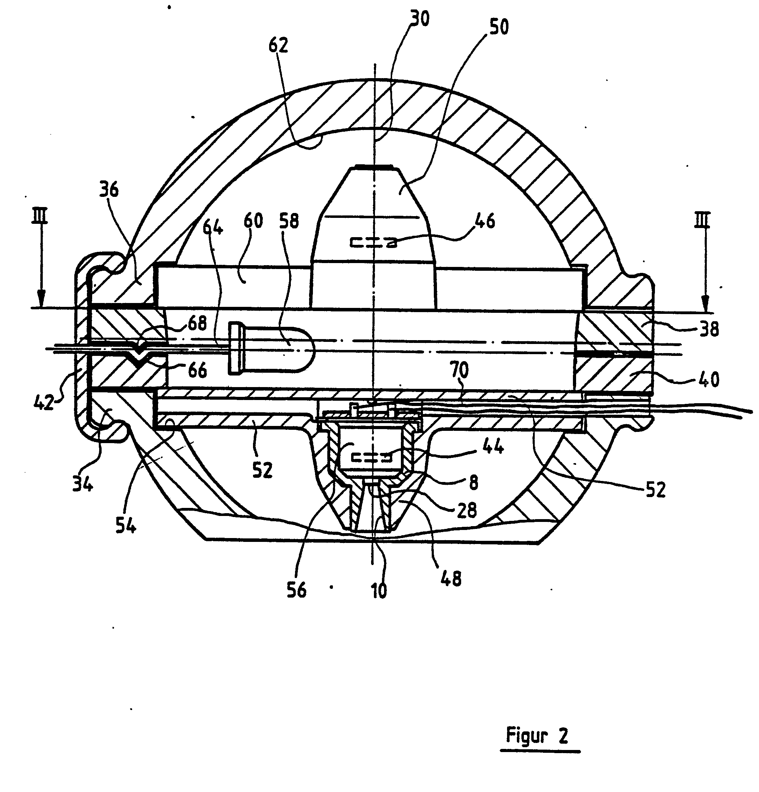

Fig. 2 zeigt einen Schnitt durch eine Ulbricht'sche Kugel, welche zwei Kugelhälften 34, 36 enthält. Zwischen den genannten Kugelhälften 34 und 36 sind zwei Zwischenringe 38, 40 angeordnet, wobei die derart gebildete Kugel mittels Spannklammern 42 zusammengehalten wird. Diese Kugel enthält zwei Photoempfänger 44, 46, welche in Aufnahmevorrichtungen 48, 50 angeordnet sind. Diese Aufnahmevorrichtungen 48 und 50 sind identisch aufgebaut und es soll der Einfachheit halber nachfolgend nur die untere Aufnahmevorrichtung 48 näher erläutert werden. Die Aufnahmevorrichtung 48 ist mittels Armen 52 in einer Nut 54 der unteren Kugelhälfte 34 angeordnet. Innerhalb der Aufnahmevorrichtung 48 befindet sich koaxial zur Symmetrieachse 30 die Blende 8 mit der kegelförmigen Blendenfläche 10.

In der in Fig. 2 dargestellten Ausführungsform sind zur Aufnahme der Photoempfänger 44, 46 topfförmige Erweiterungen 56 vorgesehen. Diese sind bevorzugt an der aus matt-schwarzem Kunststoff hergestellten Blende 8 ausgeformt und so gestaltet, daß sie als Arretierung und Fixierung für das Photoempfängerelement 44 bzw. 46 dienen können. Die Photoempfänger 44 und 46 sind derartig im Strahlengang hinter dem oberen Rand 28 der Blendenfläche 10 angeordnet, daß ihre lichtempfindliche Fläche größer ist als der durch die Blende dringende Lichtstrahl, d. h. die lichtempfindliche Fläche des Photoempfängers 44 bzw. 46 muß so groß und so angeordnet sein, daß keine Strahlen, die die Blende 8 durchdringen, verloren gehen.

Eine als LED ausgebildete Lichtquelle 58 ist zwischen den Armen 52 und 60 der unteren bzw. oberen Aufnahmevorrichtung 48 bzw. 50 angeordnet. Mittels der Arme 52, 60 wird in einfacher Weise eine Abschirmung der Lichtquelle 58 bewirkt, so daß keine direkten Strahlen zu den Bezugsflächen 4, 62 gelangen können, welche somit ausschließlich von diffusem Licht bestrahlt werden. Die Lichtquelle 58 ist mit ihren Stromzuführungen bzw. Beinchen zwischen die Zwischenringe 38 und 40 eingeklemmt, wobei mittels Sicke 66 und Nase 68 eine einfache und dennoch zuverlässige Arretierung der Lichtquelle 58 erreicht wird. Eine derart ausgebildete Kugel läßt sich aus wenigen Bauteilen und in besonders einfacher Weise herstellen und montieren, wobei zugleich optimale Bedingungen hinsichtlich der lichttechnischen Anforderungen geschaffen sind.

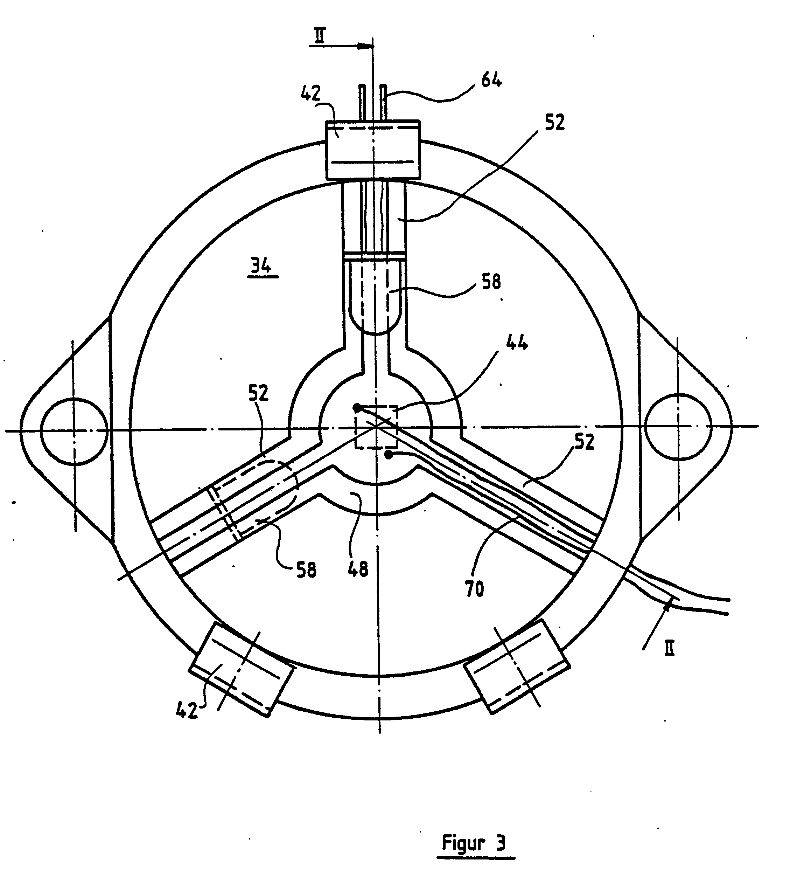

Fig. 3 zeigt einen Schnitt entlang Schnittlinie III - III gemäß Fig. 2 und die Anordnung der unteren Aufnahmevorrichtung 48 in der Mitte der Kugel ist ohne weiteres ersichtlich. Die Aufnahmevorrichtung 48 ist mittels drei sternförmig angeordneten Armen 2 in der Kugelhälfte 34 angeordnet. Durch die Linie II - II ist die Schnittebene von Fig. 2 angedeutet. Die Lichtquelle 58 ist exakt oberhalb dem einen Arm 52 angeordnet und es ist ersichtlich, daß auf diese Weise eine direkte Bestrahlung der unteren Bezugsfläche verhindert wird. Die Lichtquelle 58 ist mit ihren Beinchen 64 in der oben erläuterten Weise zwischen den hier nicht weiter dargestellten Zwischenringen befestigt. Von dem Photoempfänger 44 werden die Stromzuführungen 70 über bzw. innerhalb des Beinchens 52 nach außen geführt. Strichpunktiert ist noch eine weitere Lichtquelle 58 angedeutet. Sofern diese Lichtquelle Licht mit der gleichen Wellenlänge wie die erste Lichtquelle ausstrahlt, kann somit in einfacher Weise eine Erhöhung der Lichtintensität erreicht werden, ohne daß hierzu eine besonders große Lichtquelle erforderlich ist. Bevorzugt strahlen die Lichtquellen 58, wobei es sich auch um mehr als zwei Lichtquellen handeln kann, Licht von verschiedenen Wellenlängen aus. Durch separates Einschalten bzw. Umschalten auf die eine oder andere Lichtquelle können somit mit ein und derselben Meßeinrichtung die unterschiedlichsten Meßstreifen erfaßt und ausgewertet werden.

**Patentansprüche**

1. Vorrichtung zur reflexionsphotometrischen Messung des Reflexionsvermögens einer Meßfläche (4), die einen bestimmten, zur Auswertung heranzuziehenden Teil einer Objektfläche, insbesondere eines Testfeldes (6) zur Bestimmung medizinisch relevanter Bestandteile von Körperflüssigkeiten bildet, mit einer Lichtquelle (58) zur Beleuchtung der Meßfläche (4) bevorzugt mit diffusem Licht, einem Photoempfänger (2) zum Empfang des von der Meßfläche (4) reflektierten Lichtes und einer im Strahlengang zwischen Meßfläche (4) und Photoempfänger (2) angeordneten Blende (8), dadurch gekennzeichnet, daß

die Blende (8) eine im wesentlichen in Form einer sich zum Photoempfänger hin verjüngenden Kegelstumpfmantelfläche ausgebildete Blendenfläche (10) aufweist und die Blendenfläche (10) die Symmetrieachse (30) des Strahlengangs über einen Teil (16) von dessen Länge mit einer absorbierenden Oberfläche (11) im wesentlichen symmetrisch umgibt,

so daß ein von außerhalb der Meßfläche reflektierter Lichtstrahl weder direkt noch nach einer Reflexion an der Blendenfläche zum Photoempfänger gelangen kann.

2. Vorrichtung nach Anspruch 1, dadurch gekennzeichnet, daß die Blendenfläche so gestaltet ist, daß ihr oberer Rand (28), ihr unterer Rand (26) und die Begrenzung (23) der Meßfläche (4) näherungsweise auf einer Schar von Geraden (22, 24) liegen, die die Symmetrieachse innerhalb der durch die Blendenfläche (10) umfassten Blendenöffnung (9) schneiden und die Symmetrieachse (30) symmetrisch umgeben.

3. Vorrichtung nach einem der Ansprüche 1 oder 2, dadurch gekennzeichnet, daß eine zweite Blende (18) mit im wesentlichen ebener oder zum Photoempfänger (2) konkav gekrümmter Blendenfläche (19) vorgesehen ist, die eine die Meßfläche (4) umgebende zur Symmetrieachse (30) des Strahlengangs symmetrische Öffnung aufweist und dicht bei der Meßfläche (4) angeordnet ist.

4. Vorrichtung nach einem der vorhergehenden Ansprüche, dadurch gekennzeichnet, daß die Blenden (8, 18) zumindest auf den im Strahlengang befindlichen Oberflächen (11, 21) schwarz ausgebildet sind.

5. Vorrichtung nach einem der vorhergehenden Ansprüche, dadurch gekennzeichnet, daß die Meßfläche (4) über eine Ulbricht'sche Kugel (34, 36) diffus beleuchtet wird, daß ein zweiter Photoempfänger (46) zur Messung eines Referenzwertes an einer Referenzfläche bekannten Reflexionsvermögens vorhanden ist und daß als Referenzfläche bekannten Reflexionsvermögens zur Bestimmung des Referenzwertes ein Teil (62) der inneren Oberfläche der Ulbricht'schen Kugel (34, 36) verwendet wird.

6. Vorrichtung nach Anspruch 5, dadurch gekennzeichnet, daß beide Photoempfänger (44, 46) gleich ausgebildete Blenden (8) aufweisen, die Blenden (8) und die Photoempfänger (44, 46) jeweils in einer Aufnahmevorrichtung (48, 50) angeordnet sind, welche mittels sternförmig von der Aufnahmevorrichtung (48, 50) ausgehende Armen (52, 60) in der bevorzugt aus zwei Kugelhälften (34, 36) bestehenden Kugel angeordnet sind.

7. Vorrichtung nach Anspruch 6, dadurch gekennzeichnet, daß die Lichtquelle (58) zwischen zwei Armen (52, 60) der beiden Aufnahmevorrichtungen (48, 50) derart angeordnet ist, daß mittels der Arme (52, 60) eine direkte Bestrahlung der Meßfläche (4) und der Referenzfläche (62) verhindert wird.

8. Vorrichtung nach Anspruch 6 oder 7, dadurch gekennzeichnet, daß die Arme (52, 60) der Aufnahmevorrichtung (48, 50) jeweils in Nuten am Rand der Kugelhälften (34, 36) angeordnet sind.

9. Vorrichtung nach einem der Ansprüche 6 bis 8, dadurch gekennzeichnet, daß zwischen den Kugelhälften (34, 36) 'zwei Zwischenringe (38, 40) angeordnet sind und daß die bevorzugt als eine LED ausgebildete Lichtquelle (58) mittels ihren Stromzuführungen (64) zwischen die Zwischenringe (38, 40) eingeklemmt ist, wobei zur Arretierung der Lichtquelle (58) der eine Zwischenring (40) eine Sicke (66) aufweist, in welche eine Nase (68) des anderen Zwischenringes (38) eingreift.

10. Vorrichtung nach einem der vorhergehenden Ansprüche, dadurch gekennzeichnet, daß die Blende (8) mit der kegelstumpfmantelförmigen Blendenfläche (10) und die Aufnahmevorrichtung für den Photoempfänger (2, 44, 46) in einem Bauteil angeordnet sind, wobei die Aufnahmevorrichtung eine sich an den oberen Rand (28) der Blendenfläche (10) anschließende, der Formgebung des Photoempfängers (2, 44, 46) angepaßte Erweiterung (56) einschließt.

**Claims**

1. Device for the reflection photometric measurement of the reflecting power of a measurement surface (4) which forms particular part of an object surface to be used for the evaluation, especially of a test field (6) for the determination of a medicinally relevant component of a body fluid, with a light source (58) for the illumination of the measurement surface (4) preferably with diffuse light, a photoreceiver (2) for the reception of the light reflected from the measurement surface (4) and an aperture (8) arranged in the optical path between measurement surface (4) and photoreceiver (2), characterised in that the aperture (8) has an aperture surface (10) constructed substantially in the form of a truncated conical surface tapering towards the photoreceiver and the aperture surface (10) surrounds substantially symmetrically the axis of symmetry (30) of the optical path over a part (16) of its length with an absorbing surface (11) so that a light beam reflected from outside of the measurement surface can pass to the photoreceiver neither directly nor after a reflection on the aperture surface.

2. Device according to claim 1, characterised in that the aperture surface is so constructed that its upper edge (28), its lower edge (26) and the boundary (23) of the measurement surface (4) lie approximately on a number of lines (22, 24) which cut the axis of symmetry within the aperture opening (9) encompassed by the aperture surface (10) and symmetrically surround the axis of symmetry (30).

3. Device according to one of claims 1 or 2, characterised in that a second aperture (18) is provided, with an aperture surface (19) which is substantially flat or curved concavely to the photoreceiver (2), which has an opening surrounding the measurement surface (4) symmtetrical to the axis of symmetry (30) of the optical path and is arranged close to the measurement surface (4).

4. Device according to one of the preceding claims, characterised in that the apertures (8, 18) are made black at least on the surfaces (11, 21) present in the optical path.

5. Device according to one of the preceding claims, characterised in that the measurement surface (4) is diffusely illuminated via an Ulbricht sphere (34, 36), that a second photoreceiver (46) is present for the measurement of a reference value of a reference surface of known reflecting power and that, as reference surface of known reflecting power for the determination of the reference value, there is used a part (62) of the inner surface of the Ulbricht sphere (34, 36).

6. Device according to claim 5, characterised in that both photoreceivers (44, 46) have aperatus (8) alike in design and the aperatus (8) and the photoreceivers (44, 46) are each arranged on a receiving device (48, 50) which are arranged by means of arms (52, 60) extending out star-like from the receiving device (48, 50) in the sphere preferably consisting of two hemispheres (34, 36).

7. Device according to claim 6, characterised in that the light source (58) is arranged between two arms (52, 60) of the two receiving devices (48, 50) in such a manner that, by means of the arms (52, 60), a direct illumination of the measurement surface (4) and of the reference surface (62) is prevented.

8. Device according to claim 6 or 7, characterised in that the arms (52, 60) of the receiver device (48, 50) are each arranged in grooves on the edge of the hemispheres (34, 36).

9. Device according to one of claims 6 to 8, characterised in that between the hemispheres (34, 36) are arranged two intermediate rings (38, 40) and that the light source, preferably formed as an LED, is clamped by means of its current leads (64) between the intermediate rings (38, 40), whereby, for the arresting of the light source (58), one intermediate ring (40) has a corrugation (66) in which a projection (68) of the other intermediate ring (38) engages.

10. Device according to one of the preceding claims, characterised in that the aperture (8) with the truncated conically-shaped aperture surface (10) and the receiver device for the photoreceiver (2, 44, 46) are arranged in one constructional part, whereby the receiver device includes a widening (56) joining up with the upper edge (28) of the aperture surface (10) adapted to the shape of the photoreceiver (2, 44, 46).

**Revendications**

1. Dispositif pour l'analyse photométrique par réflexion du pouvoir réfléchissant d'une surface de mesure (4) constituant une partie déterminée d'une surface d'objet à examiner, notamment d'un champ d'essai (6) pour le dosage des constituants médicalement importants dans des liquides organiques, qui comprend une source lumineuse (58) pour l'éclairage de la surface de mesure (4), de préférence avec de la lumiere diffuse, un photo-récepteur (2) pour la réception de la lumière réfléchie par la surface de mesure (4) et un diaphragme (8) placé sur le trajet des rayons entre la surface de mesure (4) et le photorécepteur (2), caractérisé en ce que le diaphragme (8) comporte une surface de diaphragme (10) qui a sensiblement la forme d'une surface de tronc de cône allant en s'amincissant vers le photo-récepteur et en ce que la surface de diaphragme (10) entoure, d'une manière essentiellement symétrique, sur une partie (16) de sa longueur, l'axe de symétrie (30) du trajet des rayons par une surface absorbante (11), de sorte qu'aucun rayon lumineux réfléchi à l'extérieur de la surface de mesure ne peut arriver jusqu'au photo-récepteur, ni directement ni après reflexion sur la surface de diaphragme.

2. Dispositif selon la revendication 1, caractérisé en ce que la surface de diahragme possède une forme telle que son bord supérieur (28), son bord inférieur (26) et la limite (23) de la surface de mesure (4) se trouvent approximativement sur une famille de droites (22, 24) qui coupent l'axe de symétrie à l'intérieur de l'ouverture (9) du diaphragme entourée par la surface de diaphragme (10) et entourent symétriquement l'axe de symétrie (30).

3. Dispositif selon l'une des revendications 1 ou 2, caractérisé en ce qu'il comprend un deuxième diaphragme (18) ayant une surface de diaphragme (19), sensiblement plane ou incurvée avec une concavité tournée vers le photo-récepteur (2), qui comporte une ouverture symétrique par rapport à l'axe de symétrie (30) du trajet des rayons et entourant la surface de mesure (4) et qui est placé a proximité immédiate de la surface de mesure (4).

4. Dispositif selon l'une des revendications 1 à 3, caractérisé en que les diaphragmes (8, 18) sont noirs, au moins sur leurs surfaces (11, 21) qui se trouvent sur le trajet des rayons.

5. Dispositif selon l'une des revendications 1 à 4, caractérisé en ce que la surface de mesure (4) est éclairée en lumière diffuse au moyen d'une sphère d'Ulbricht (34, 36), en ce qu'un deuxième photo-récepteur (46) mesure une valeur de référence sur une surface de référence ayant un pouvoir réfléchissant connu et en ce que, comme surface de référence ayant un pouvoir réfléchisant connu permettant la détermination de la valeur de référence, on utilise une partie (62) de la surface intérieure de la sphère d'Ulbricht (34, 36).

6. Dispositif selon la revendication 5, caractérisé en ce que les deux photo-récepteurs (44, 46) comportent des diaphragmes (8) identiques, en ce que les diaphragmes (8) et les photo-récepteurs (44, 46) sont montés dans des dispositifs de rèception (48, 50) qui, au moyen de bras (52, 60) partant en étoile du dispositif de réception (48, 50) sont montés dans la sphère constituée de préférence par deux moitiés de sphère (34 36).

7. Dispositif selon la revendication 6, caractérisée en ce que la source lumineuse (58) est placée entre deux bras (52, 60) des deux dispositifs de réception (48, 50) de telle manière que les bras (52, 60) empêchent un éclairage direct de la surface de mesure (4) et de la surface de référence (62).

8. Dispositif selon l'une des revendications 6 ou 7, caractérisé en ce que les bras (52, 60) des dispositifs de réception (48, 50) se trouvent dans des rainures ménagées dans les bords des moitiés de sphère (34, 36).

9. Dispositif selon l'une des revendications 6 à 8, caractérisé en ce qu'il comprend, entre les moitiés de sphère (34, 36) deux anneaux intermédiaires (38, 40) et en ce que la source lumineuse (58), qui est de préférence du type Diode Electroluminescente est serrée, au moyen de ses amenées de courant (64), entre les anneaux intermédiaires (38, 40), le blocage de la source lumineuse (58) étant obtenu du fait que l'un (40) des anneaux intermédiaires comporte une moulure (66) dans laquelle s'engage une partie saillante (68) de l'autre anneau intermédiaire (38).

10. Dispositif selon l'une des revendications 1 à 9, caractérisé en ce que le diaphragme (8) qui a une surface de diaphragme (10) en forme de surface de tronc de cône et le dispositif de réception du photorécepteur (2, 44, 46) sont montés dans un élément de construction, le dispositif de réception comprenant une partie élargie (56) adaptée à la forme du photo-récepteur (2, 44, 46) et se raccordant au bord supérieur (28) de la surface de diaphragme (10).

Figur 1

Figur 2

Figur 3